# EUROPEAN PATENT SPECIFICATION

(11) **EP 1 473 403 B1**
(45) Date of publication and mention of the grant of the patent: **17.04.2013**
(21) Application number: 04250622.0
(22) Date of filing: 05.02.2004
(51) Int. Cl.: D06F 25/00, D06F 58/28

(54) **Washing machine**
Waschmaschine
Machine à laver

(30) Priority: 30.04.2003 KR 2003027749
(43) Date of publication of application: 03.11.2004
(73) Proprietor: Samsung Electronics Co., Ltd., Suwon-si, Gyeonggi-do, 443-742 (KR)
(72) Inventor: Chung, Young Suk, Pusan-City (KR)
(74) Representative: Grey, Ian Michael

(56) References cited:
- DE-A- 4 211 012
- GB-A- 854 944
- US-A1- 2002 178 765

## Description

The present invention relates to a washing machine including a tub to receive laundry to be washed and a laundry drying unit for drying washed laundry comprising an air duct having each end in communication with the interior of the tub, a heater and a condensing element being mounted in the duct so that moisture is removed from the air circulating through the duct by the condensing element before being heated by the heater. A method of controlling a washing machine is also disclosed.

A washing machine may incorporate a drying device for blowing heated air onto laundry after it has been washed and a spin-drying cycle is complete. A drum-type washing machine in which the laundry is contained within a rotatably mounted drum is often provided with a drying device.

The drying device includes a centrifugal fan and a drying heater so that when a drying cycle is initiated, hot air generated by the drying heater blows into the rotatably mounted drum to dry the laundry as it is agitated during rotation of the drum. The hot air blown into the drum is drawn to the centrifugal fan in the wall of the water tub together with moisture absorbed from the laundry. The moisture condenses on the wall of the tub under an influence of a small amount of cold water supplied from a condensation hose connected to an external water source to the wall of the tub. The condensate flows down the wall of the tub and collects at the bottom of the tub from where it is discharged from the washing machine through an outlet.

A washing machine and a method of controlling a washing machine according to the preamble of the independent claims is known, for instance, from GB 854 944.

In a conventional method of controlling a drying cycle, a user may set a drying time for the laundry in consideration of its weight. However, this is an inaccurate method because the weight of the laundry when wet will be very different to when it is dry and some types of laundry retain more water than others so that even when the initial weight of two different sets of laundry is the same, their weights may be very different after the spin-drying cycle has been completed. This makes it particularly difficult to accurately determine the optimum drying time.

To alleviate the aforementioned problem, it is known to provide a method of controlling a drying cycle in which the temperature of air blown into the drum is detected and the drying cycle is terminated when the air temperature reaches a set temperature. However, the required drying time still varies depending on the weight of the laundry, moisture contained in the laundry and the temperature of the cold water supplied from an external water source. Therefore, it is still difficult to accurately set the drying time.

It will be appreciated that if the drying time is too short, the drying process will be terminated before the laundry is completely dry. In contrast, if the drying time is too long, the laundry may be damaged and energy wasted. The present invention seeks to provide a washing machine in which the aforementioned problems are overcome or alleviated.

A washing machine according to the present invention is characterised by a temperature detecting sensor mounted in a lower portion of the duct such that the temperature detecting sensor is submerged in condensed water collecting in the bottom of the duct to detect the temperature of said water and a controller operable to terminate operation of the laundry drying unit in dependence on the difference of the temperature of the water detected by the temperature detecting sensor over a preset time period.

Preferably, the temperature detecting sensor is operable to detect the temperature of water condensed in the duct at the start and end of a number of preset time periods, the controller being operable to determine the temperature difference over each preset time period and whether the determined temperature difference over subsequent preset time periods is increasing or decreasing.

In a preferred embodiment, the controller is operable to accumulate the determined temperature differences over each preset time period if it is determined that the temperature difference over subsequent preset time periods is decreasing, and compare said accumulated temperature with a predetermined set value.

The controller is preferably operable to terminate operation of the laundry drying unit when the accumulated temperature is equal to or less than a first predetermined set value.

Conveniently, the controller is operable to terminate operation of the laundry drying unit when the accumulated temperature is not equal to or less than a first predetermined set value and the temperature difference over a preset time period is equal to or less than a second predetermined set value corresponding to that preset time period.

In a preferred embodiment, the controller is operable to determine whether the temperature difference over a preset time period is equal to or less than a third predetermined set value when the accumulated temperature is not equal to or less than a first predetermined set value and the temperature over a preset time period is not equal to or less than second set value corresponding to that preset time period.

Preferably the washing machine further comprises a discharge conduit disposed in a lower portion of the duct to discharge water condensed in the duct, wherein the temperature detecting sensor is disposed between a lower end of the duct in communication with the interior of the tub and the discharge conduit.

Conveniently, the condensing element is a spray nozzle in communication with a cold water supply hose connected to the condensing element and a valve disposed in the cold water supply hose.

In one embodiment, the valve is operable to selectively supply or cut off the cold water supplied from an external source so that the amount of water collecting in the duct is greater than the amount of water discharged through the discharge conduit, so that the temperature detecting sensor is submerged in the collected water.

The present invention also provides a method of controlling a washing machine including a tub to receive laundry to be washed and a laundry diying unit for drying washed laundry comprising an air duct having each end in communication with the interior of the tub and a heater and a condensing element mounted in the duct so that moisture is removed from the an circulating through the duct by the condensing element before being heated by the heater. The method is characterised by the steps of detecting the temperature of condensed water collected in the bottom of the duct using a temperature detecting sensor disposed in a lower portion of the ductsuch that it is submerged in said condensed water and terminating operation of the laundry drying unit in dependence on the difference of the temperature detected by the temperature detecting sensor over a preset time period.

In a preferred embodiment, the method includes the step of detecting the temperature of the water condensed in the duct at the start and end of a number of preset time periods and terminating operation of the laundry drying unit when the determined temperature over subsequent preset time periods is decreasing.

Embodiments of the invention will now be described, by way of example only, and in conjunction with the following drawings, in which:
Figure 1 is a perspective view of a washing machine according to a first embodiment of the present invention;
Figure 2 is a sectional view of the washing machine of Figure 1;
Figures 3 to 5 are views showing principal parts of the washing machine of Figure 1;
Figure 6 is a control block diagram of the washing machine of Figure 1;
Figures 7A to 7E are views illustrating drying processes according to temperatures of condensed water;
Figure 8A is a view illustrating an operation of calculating an accumulated temperature difference, according to a second embodiment of the present invention;
Figure 8B is a view illustrating set numbers of detections that are set to correspond to accumulatively counted drying times, according to a third embodiment of the present invention; and
Figures 9A and 9B are flowcharts showing a method of controlling a drying process of the washing machine of Figure 1, according to the first embodiment of the present invention.

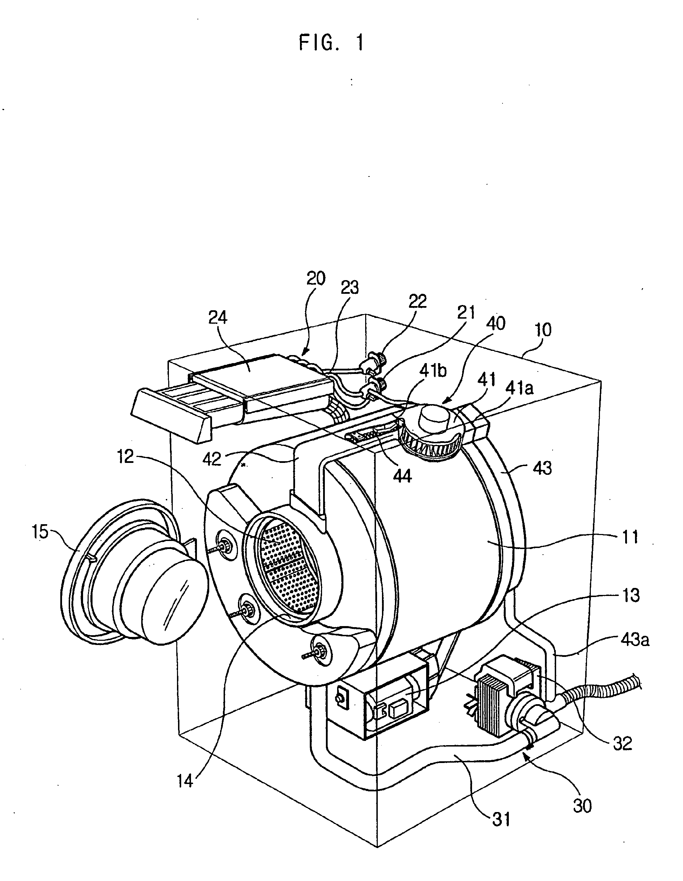

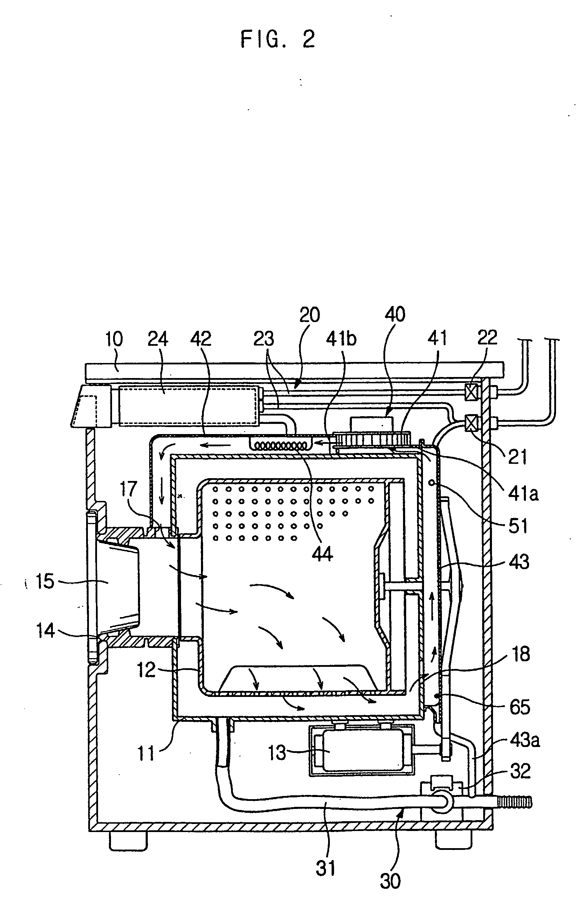

As shown in Figures 1 and 2, a washing machine of a first embodiment of the present invention includes a cylindrically shaped tub 11 mounted in a housing 10 and a cylindrically shaped drum 12 mounted for rotation within the tub 11. The drum 12 has a number of perforations formed in its surface. A drive motor 13 is positioned below the tub 11 to rotatably drive the drum 12 during washing, rinsing and spin-drying cycles. An opening 14 is formed in the front of both the tub 11 and the drum 12 through which a user can insert or remove laundry into or from the drum 12. A door 15 is mounted on the housing 10 to enable the opening 14 to be selectively opened and closed.

A water supply unit 20 is disposed above the tub 11 and includes water supply valves 21,22, water supply hoses 23 and a detergent dissolving device 24 so that detergent is dissolved in the water before being supplied to the tub 11. A discharge unit 30 is disposed under the tub 11 to discharge washing water remaining inside the tub 11, and includes a discharge hose 31 and a discharge pump 32.

The washing machine is equipped with a drying device 40 including a centrifugal fan 41 mounted on the tub 11, a discharge duct 42 connecting an outlet 41 b of the centrifugal fan 41 to an air inlet 17 formed in an upper portion of the opening 14 of the tub 11, and a condensing duct 43 mounted on the back of the tub 11 which communicates with an air outlet 18 formed in a lower portion of the back of the tub 11 with an inlet 41a of the centrifugal fan 41. The drying device 40 also includes a heater 44 disposed in the discharge duct 42 to supply hot air to the inside of tub 11, and a condensing unit disposed in the condensing duct 43 so that moisture is condensed and removed from the air as it moves upwardly through the condensing duct 43. With this construction, laundry in the tub 11 is heated and dried by heating air which is blown into the tub 11 by the centrifugal fan 41. Moisture in the air is removed as the air is drawn to the centrifugal fan 41 through the condensing duct 43.

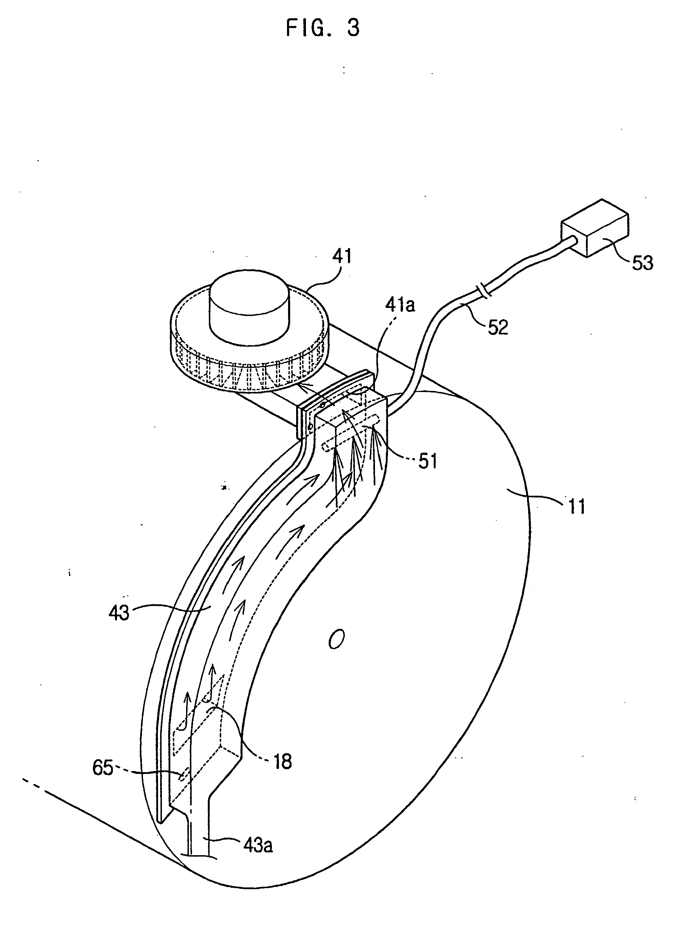

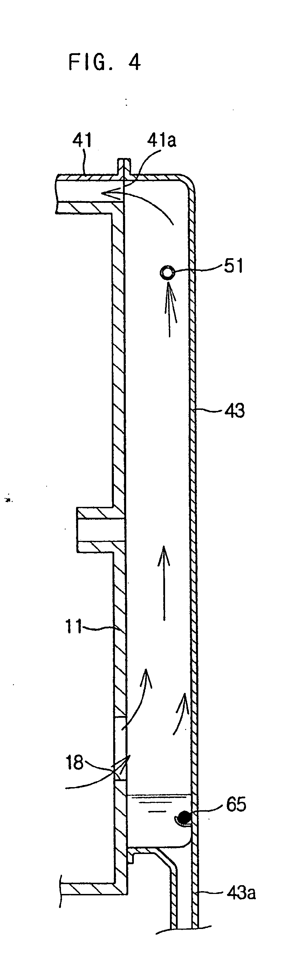

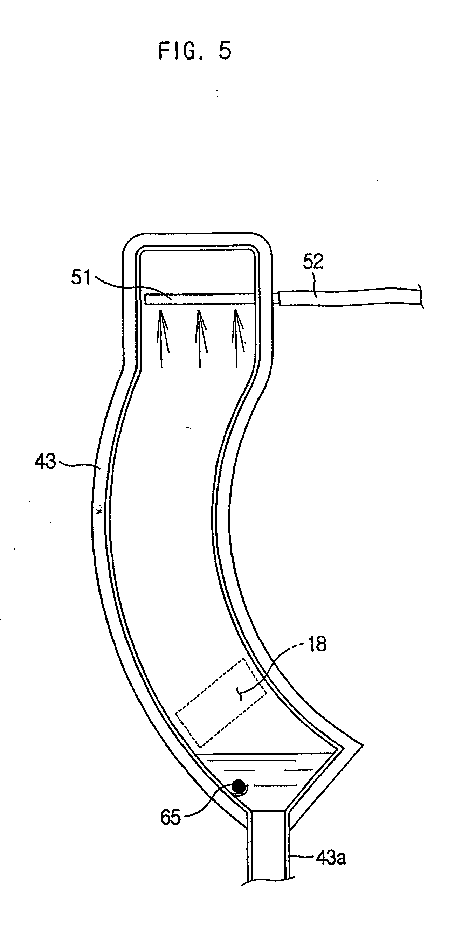

As shown in Figures 3 to 5, the arcuately shaped condensing duct 43 forms a flow passage that connects the air outlet 18 formed in the lower portion of the back of the tub 11 with the inlet 41 a of the centrifugal fan 41.

The condensing unit includes a spray nozzle 51 disposed inside the condensing duct 43 for spraying cold water into the duct 43. The nozzle 51 is connected to a cold water supply hose 52 that supplies cold water to the spray nozzle 51, and a valve 53 disposed inside the cold water supply hose 52 which is selectively opened or closed to supply cold water to the nozzle 51.

A discharge conduit 43a is formed in the condensing duct 43 to discharge condensed water collected in the bottom of the duct 43. One end of the discharge conduit 43a is connected to the discharge hose 31. A water temperature detecting unit 65 is disposed between the discharge conduit 43a and the air outlet 18 to detect the water temperature of the condensate collected in the bottom of the duct 43. The valve 53 operates so that water collects at the bottom of the condensing duct 43 before being discharged through the discharge conduit 43a, so that the water temperature detecting unit 65 is submerged in the collected water and feeds the water temperature to a controller 61, described later and which determines whether the drying cycle is complete in dependence on the detected temperature of the collected condensed water.

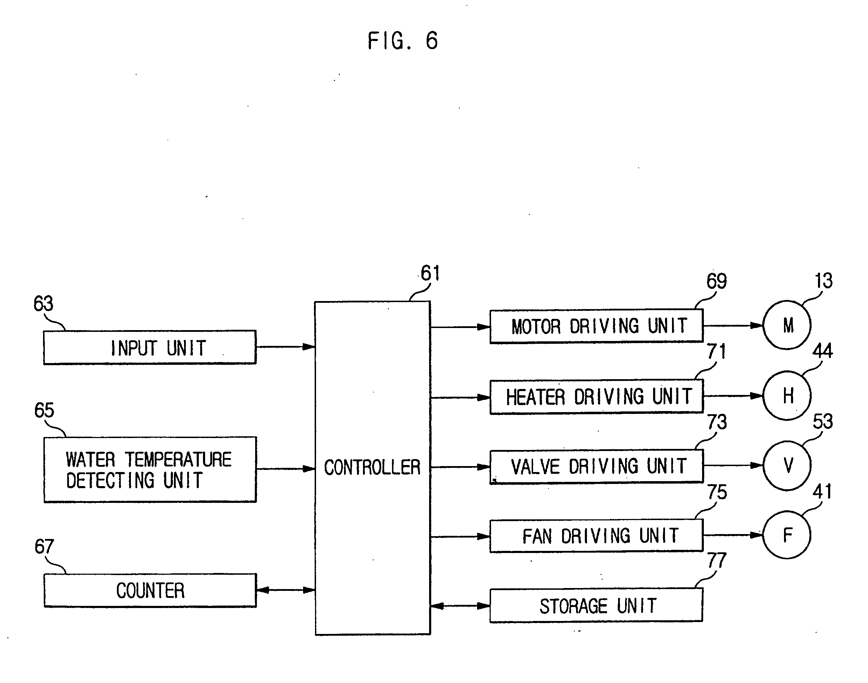

Referring to Figure 6, the controller 61 has input terminals connected to an input unit 63 through which a user can input setting commands, and to the water temperature detecting unit 65 that detects the temperature of the condensed water. The controller 61 also has output terminals connected to a motor driving unit 69 that drives a driving motor 13, a heater driving unit 71 that drives the drying heater 44, a valve driving unit 73 that drives the valve 53, and a fan driving unit 75 that drives the centrifugal fan 41. The controller 61 is also connected to a counter 67 and a storage unit 77, so that the controller 61 receives a signal indicative of the elapsed time counted by the counter 67, and stores or reads data in the storage unit 77.

The temperatures of water condensed during the drying cycle detected by the water temperature detecting unit 65 is influenced by various factors.

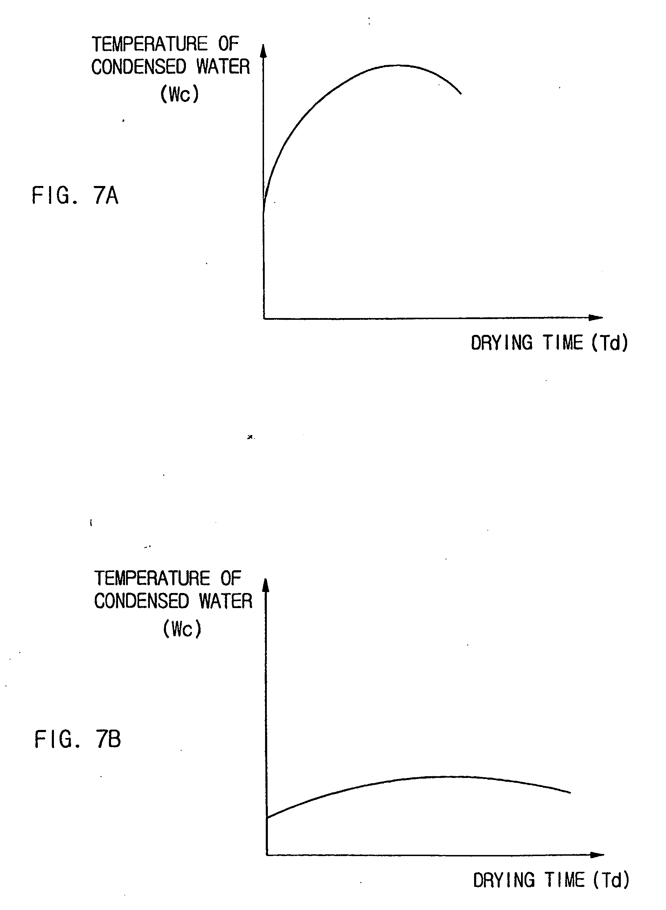

Figure 7A is a graph representing the variation of temperature detected by the water temperature detecting unit 65 until the drying cycle is terminated in a case where the water supplied through the cold water supply hose 52 is at a relatively high temperature and Figure 7B is a graph representing the variation of the temperature detected by the water temperature detecting unit 65 until the drying cycle is terminated in a case in which the temperature of the cold water supplied through the cold water supply hose 52 is at a relatively low temperature.

It will be appreciated from Figures 7A and 7B that the temperature detected by the water temperature detecting unit 65 is not fixed to a specific temperature in a point of view of a determination of the drying time.

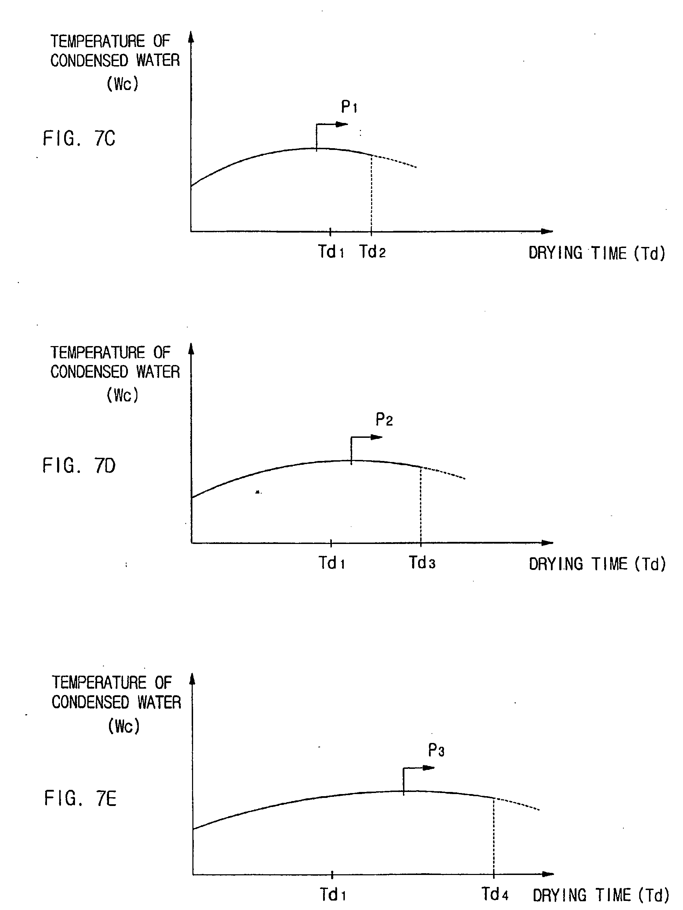

Figure 7C is a graph representing the variation in temperature detected by the water temperature detecting unit 65 until the drying cycle is terminated, in a case in which a weight of laundry is of a relatively light weight. Figure 7D is a graph representing the variation in temperature detected by the water temperature detecting unit 65 until the drying cycle is terminated, in a case in which the weight of the laundry is of an average weight and Figure 7E is a graph representing the variation in temperature detected by the water temperature detecting unit 65 until the drying cycle is terminated in a case in which the weight of the laundry is a relatively heavy weight.

In Figure 7C, the temperature detected by the water temperature detecting unit 65 starts to decrease from a first reference point P1, and then the drying cycle terminates when a first drying time Td2 required for the temperature to decrease by a certain value is reached. If the drying cycle is terminated before the first drying time Td2, the drying performance of the washing machine is reduced and if the drying cycle is terminated after the first drying time Td2, the laundry may be damaged due to excessive heat.

In Figures 7D and 7E, the temperatures detected by the water temperature detecting unit 65 starts to decrease from second and third reference points P2 and P3, respectively, and then the drying cycle is terminated when second and third drying times Td3 and Td4 required for the temperatures to decrease by certain values are reached, respectively. If the drying cycle is terminated before the second and third drying times Td3 and Td4, respectively, the drying performances of the washing machine is reduced, and if the drying cycle is terminated after the second and third drying times Td3 and Td4, respectively, the laundry is excessively dried and may be damaged.

As shown in Figures 7A to 7E, the temperature detected by the water temperature detecting unit 65 is different according to the drying times, but patterns of the variations of the detected temperatures are similar to each other. That is, the detected temperatures increase in initial stages of the drying cycle, respectively, and decrease from the first, second and third reference points P1, P2 and P3, respectively, and then the first, second and third drying times, respectively are reached when a variation rate of the detected temperatures reaches a certain value.

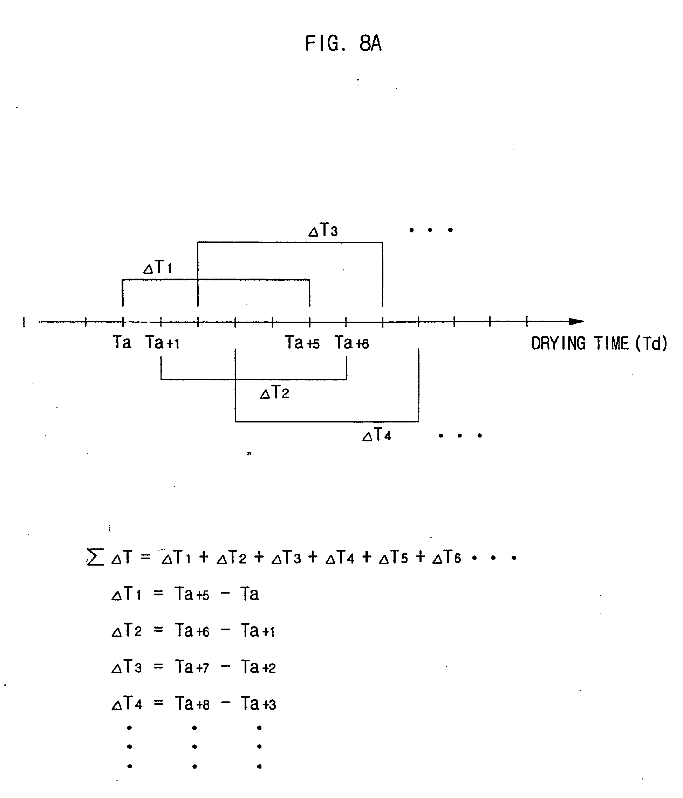

The controller 61 accumulates the water temperatures detected by the water temperature detecting unit 65, and determines whether an end of the drying process is reached based upon the variation in water temperature. That is, as shown in Figure 8A, the controller 61 is fed with the detected temperature from the water temperature detecting unit 65 at regular drying time intervals, for example, at time points Ta, Ta+1, Ta+2. The controller 61 calculates the temperature difference for each of the number of set sections. That is, a difference ΔT between the initial and the final temperature is obtained in each of the set sections, for example, a first set section being Ta ~ Ta + 5, a second set section being Ta + 1 ~ Ta + 6, a third set section being Ta + 2 ~ Ta + 7. Accordingly, a difference ΔT1 between temperatures in the first set section is a difference between an initial temperature Ta and a final temperature Ta + 5 and a difference ΔT2 between temperatures in the second set section is a difference between an initial temperature Ta+1 and a final temperature Ta+6.

The controller 61 calculates the difference between temperatures in the set sections at the regular drying time intervals, and determines whether the calculated difference temperature is decreasing to determine whether a decreasing stage of the drying cycle has started. The variation of water temperature in an increasing stage of the drying cycle is not useful for determining whether the end of the drying cycle is reached, but the variation in water temperature in the decreasing stage of the drying cycle is a useful factor to determine whether the end of the drying cycle has been reached.

The controller 61 accumulates the calculated temperature differences, compares an accumulated temperature difference with a set value, and then determines whether the end of the drying cycle has been reached. The set value is determined through many tests in consideration of the weight of the laundry, the moisture contained in the laundry and a temperature of the cold water supplied to the condensing duct 43.

If it is determined that the end of the drying cycle has been reached, the controller 61 terminates the drying process by turning off the drying heater 44, and cutting off the cold water by closing the valve 53.

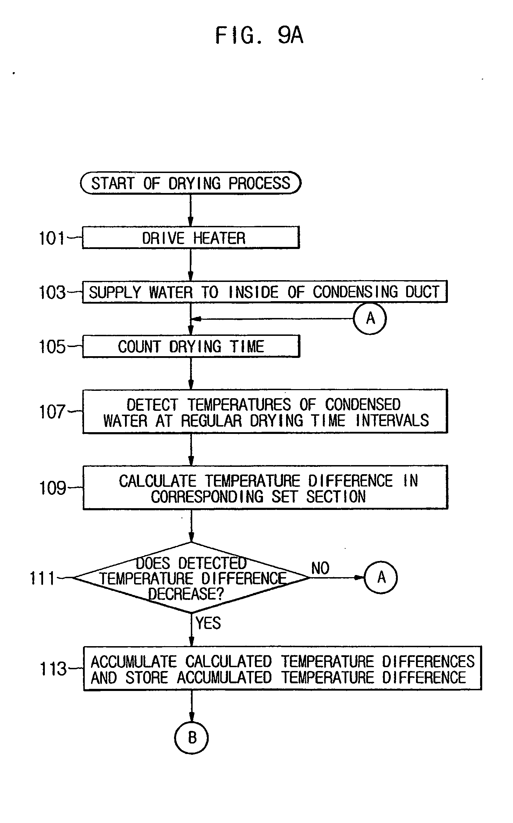

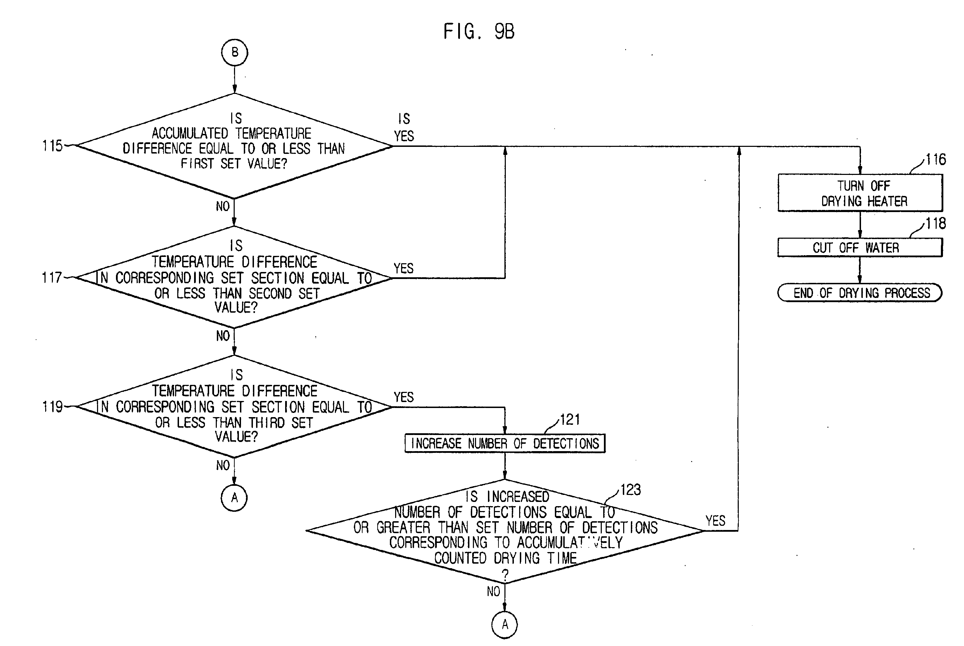

A method of controlling the washing machine with the above-described construction will be described with reference to the attached drawings. A drying process illustrated in Figures 9A and 9B may be performed in conjunction with general washing processes, that is, after a washing cycle including a series of washing, rinsing and spin-drying cycles are complete. However, the drying cycle may be independently performed to dry laundry.

To initiate a drying cycle, the controller 61 controls the motor driving unit 69 to drive the driving motor 13 and then allows the drum 12to slowly rotate so that the laundry is agitated therein. At the same time, the controller 61 controls the fan driving unit 75 and the heater driving unit 71 to drive the centrifugal fan 41 and the drying heater 44, respectively, in operation 101.

Air blown by the centrifugal fan 41 is heated by the drying heater 44 and is supplied to the inside of the tub 11.

The controller 61 controls the valve driving unit 73 to open the valve 53, so that cold water is supplied from an external water source through the cold water supply hose 52 and is sprayed to inside the condensing duct 43 via the spray nozzle 51 in operation 103. The controller 61 also controls the counter 67 to determine the elapsed drying time in operation 105.

Warm moist air passes from the drum 12 through the air outlet 18 and is drawn toward the centrifugal fan 41. As it does so, the moisture in the air is condensed, and condensed water falls down the condensing duct 43 and collects at the bottom of the condensing duct 43. The water temperature detecting unit 65 detects the temperature of the condensed water at regular drying time intervals and provides this information to the controller 61 in operation 107.

The controller 61 is supplied with the detected water temperature at each of the regular drying time intervals and calculates a difference between initial and final temperatures in each of the corresponding set sections in operation 109, and determines whether the detected temperature differences decrease in operation 111. If the detected temperature differences does not decrease as a result of a determination of the operation 111, that is, if the temperatures detected by the water temperature detecting unit 65 increase, the process returns to operation 105 and the drying process is continued. However, if the detected temperature difference decreases as a result of the determination of operation 111, the controller 61 accumulates the calculated temperature differences and stores an accumulated temperature difference in the storage unit 77 in operation 113.

The controller 61 determines whether the accumulated temperature difference ΣΔT is equal to or less than a first set value in operation 115. If the accumulated temperature difference ΣΔT is not equal to or not less than the first set value as a result of a determination of the operation 115, the controller 61 determines whether the temperature difference in a corresponding set section is equal to or less than a second set value in operation 117.

If the temperature difference in the corresponding set section is not equal to or not less than the second set value (the second set value being less than the first set value) as a result of a determination of the operation 117, the controller 61 determines whether the temperature difference in the corresponding set section is equal to or less than a third set value (the third set value being less than the second set value) in operation 119.

If the temperature difference in the corresponding set section is not equal to or not less than the third set value as a result of a determination of the operation 119, a process returns to the operation 105 and the drying cycle is continued.

If the temperature difference in the corresponding set section is equal to or less than the second set value as a result of the determination of the operation 117, for example, if the temperature difference in the corresponding set section is a relatively great value and, therefore, satisfies a termination condition of the drying cycle, as in a case in which the weight of the laundry is the relatively small weight as shown in Figure 7C, the drying heater 44 is turned off in operation 116, and cold water supplied through the cold water supply hose 52 is cut off by closing the valve 53 in operation 118, thus terminating the drying cycle.

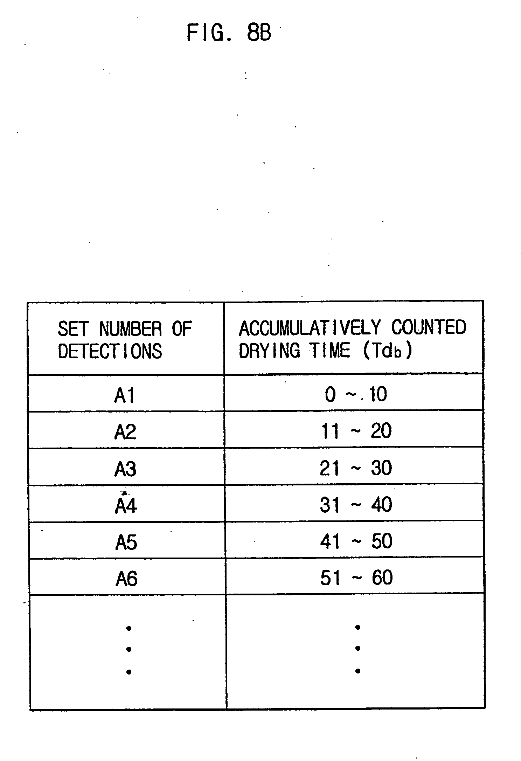

If the temperature difference in the corresponding set section is equal to or less than the third set value as a result of the determination of the operation 119, a number of detections is increased in operation 121. Thereafter, whether the increased number of detections is equal to or greater than a set number of detections corresponding to the drying time accumulatively counted from the operation 105 is determined in operation 123 (see Figure 8B). If the increased number of detections is equal to or greater than the set number of detections as a result of a determination of the operation 123, for example, if the temperature difference in the corresponding set section satisfies the termination condition of the drying cycle, as in a case in which the weight of the laundry is the average weight as shown in Figure 7D, the drying heater 44 is turned off in the operation 116, and the cold water supplied through the cold water supply hose 52 is cut off by closing the drying valve 53 in the operation 118, thus terminating the drying cycle.

If the increased number of detections is not equal to or is not greater than the set number of detections as a result of the determination of operation 123, the temperature difference in the corresponding set section is determined not to satisfy the termination condition of the drying process, so that the process returns to operation 105.

Further, if the accumulated temperature difference ΣΔT is equal to or less than the first set value as a result of the determination of the operation 115, for example, if the termination condition of the drying cycle is satisfied, as in a case in which the drying time is the relatively length time and the variations of the water temperatures are relatively slow as shown in Figure 7E, the drying heater 44 is turned off in the operation 116, and the cold water supplied through the cold water supply hose 52 is cut off by closing the valve 53 in the operation 118, thus terminating the drying cycle.

As is described above, the washing machine detects the temperature of the condensed water, and determines whether the end of the drying process is reached based upon the detected temperature. Accordingly, if the drying cycle of the laundry is completed, the drying cycle may be terminated without delay, irrespective of various factors, such as the weight of the laundry, the moisture contained in the laundry, and the temperature of cold water supplied to the inside of the condensing duct, so that the drying performance may be improved. Further, the washing machine allows the drying cycle to be accurately terminated, thus preventing excessive drying and damage to the laundry, and saving energy.

Although a few embodiments of the present invention have been shown and described, it would be appreciated by those skilled in the art that changes may be made in this embodiment without departing from the principles of the invention, the scope of which is defined in the claims and their equivalents.

## Claims

1. A washing machine including a tub (11) to receive laundry to be washed and a laundry drying unit (40) for drying washed laundry comprising an air duct (42,43) having each end in communication with the interior of the tub (11), a heater (44) and a condensing element (51) being mounted in the duct (42,43) so that moisture is removed from the air circulating through the duct (42,43) by the condensing element (51) before being heated by the heater (44), **characterised by** a temperature detecting sensor (65) mounted in a lower portion of the duct (42,43) such that the temperature detecting sensor (65) is submerged in condensed water collecting in the bottom of the duct (42,43) to detect the temperature of said water and a controller (61) operable to terminate operation of the laundry drying unit (40) in dependence on the difference of the temperature of the water detected by the temperature detecting sensor (65) over a preset time period.

2. A washing machine according to claim 1, wherein the temperature detecting sensor (65) is operable to detect the temperature of water condensed in the duct (42,43) at the start and end of a number of preset time periods, the controller (61) being operable to determine the temperature difference over each preset time period and whether the determined temperature difference over subsequent preset time periods is increasing or decreasing.

3. A washing machine according to claim 2, wherein the controller (61) is operable to accumulate the determined temperature differences over each preset time period if it is determined that the temperature difference over subsequent preset time periods is decreasing, and compare said accumulated temperature with a predetermined set value.

4. A washing machine according to claim 3, wherein the controller (61) is operable to terminate operation of the laundry drying unit (40) when the accumulated temperature is equal to or less than a first predetermined set value.

5. A washing machine according to claim 4, wherein the controller (61) is operable to terminate operation of the laundry drying unit (40) when the accumulated temperature is not equal to or less than a first predetermined set value and the temperature difference over a preset time period is equal to or less than a second predetermined set value corresponding to that preset time period.

6. A washing machine according to claim 5, wherein the controller (61) is operable to determine whether the temperature difference over a preset time period is equal to or less than a third predetermined set value when the accumulated temperature is not equal to or less than a first predetermined set value and the temperature over a preset time period is not equal to or less than a second set value corresponding to that preset time period.

7. A washing machine according to claim 6, wherein the controller (61) is operable to continue operation of the drying cycle if the temperature over a preset time period is not equal to or less than a second set value corresponding to that preset time period.

8. A washing machine according to claim 7, wherein the controller (61) is operable to increase the number of preset time periods over which temperature differences are detected and compare the increased number of detections with a set number of detections corresponding to an accumulatively determined period of time in which the laundry drying unit (40) is operational.

9. The washing machine according to any preceding claim further comprising a discharge conduit (43a) disposed in a lower portion of the duct (42,43) to discharge water condensed in the duct (42,43), wherein the temperature detecting sensor (65) is disposed between a lower end of the duct (42,43) in communication with the interior of the tub (11) and the discharge conduit (43a).

10. The washing machine according to any preceding claim wherein the condensing element (51) is a spray nozzle in communication with a cold water supply hose (52) connected to the condensing element (51) and a valve (53) disposed in the cold water supply hose (52).

11. The washing machine according to claim 10 wherein the valve (53) is operable to selectively supply or cut off the cold water supplied from an external source so that the amount of water collecting in the duct (42,43) is greater than the amount of water discharged through the discharge conduit (43a), so that the temperature detecting sensor (65) is submerged in the collected water.

12. A method of controlling a washing machine including a tub (11) to receive laundry to be washed and a laundry drying unit (40) for drying washed laundry comprising an air duct (42,43) having each end in communication with the interior of the tub (11) and a heater (44) and a condensing element (51) mounted in the duct (42,43) so that moisture is removed from the air circulating through the duct (42,43) by the condensing element (51) before being heated by the heater (44), the method being **characterised by** the steps of detecting the temperature of condensed water collected in the bottom of the duct (42,43) using a temperature detecting sensor (65) disposed in a lower portion of the duct (42,43) such that it is submerged in said condensed water and terminating operation of the laundry drying unit (40) in dependence on the difference of the temperature detected by the temperature detecting sensor (65) over a preset time period.

13. A method of controlling a washing machine according to claim 12, including the step of detecting the temperature of the water condensed in the duct (42,43) at the start and end of a number of preset time periods and terminating operation of the laundry drying unit (40) when the determined temperature over subsequent preset time periods is decreasing.

14. A method of controlling a washing machine according to claim 13, including the step of accumulating the determined temperature differences over each preset time period if it is determined that the temperature difference over subsequent preset time periods is decreasing, and the step of comparing the accumulated temperature differences with a predetermined set value.

## Patentansprüche

1. Eine Waschmaschine einschließlich einer Wanne (11) zum Aufnehmen des zu waschenden Waschguts und einer Waschgut-Trocknungseinheit (40) für das Trocknen des gewaschenen Waschguts, umfassend einen Luftkanal (42, 43), von dem jedes Ende in Kommunikation mit dem Inneren der Wanne (11) steht, wobei eine Heizvorrichtung (44) und ein Kondensationselement (51) im Luftkanal (42, 43) so angebracht sind, dass die Feuchtigkeit aus der durch den Luftkanal (42, 43) zirkulierenden Luft durch das Kondensationselement (51) entfernt wird, bevor sie durch die Heizvorrichtung (44) erwärmt wird, **gekennzeichnet durch** einen Temperaturfühler (65), welcher am unteren Ende des Luftkanals (42, 43) so angebracht ist, dass der Temperaturfühler (65) in dem sich am Boden des Luftkanals (42, 43) ansammelnden Kondenswasser eingetaucht ist, um die Temperatur des benannten Wassers zu erfassen, und eine Steuereinrichtung (61), betätigbar zur Beendigung des Betriebs der Waschgut-Trocknungseinheit (40) in Abhängigkeit von dem vom Temperaturfühler (65) über einen voreingestellten Zeitraum erfassten Temperaturunterschied des Wassers.

2. Eine Waschmaschine nach Anspruch 1, bei welcher der Temperaturfühler (65) für die Erfassung der Temperatur des im Luftkanal (42, 43) kondensierten Wassers zu Beginn und am Ende einer Anzahl voreingestellter Zeiträume betätigbar ist, wobei die Steuereinrichtung (61) betätigbar ist, um den Temperaturunterschied über jeden voreingestellten Zeitraum festzustellen und auch festzustellen, ob der über nachfolgende voreingestellte Zeiträume festgestellte Temperaturunterschied zunimmt oder abnimmt.

3. Eine Waschmaschine nach Anspruch 2, bei welcher die Steuereinrichtung (61) betätigbar ist, dass sie die festgestellten Temperaturunterschiede über jeden voreingestellten Zeitraum kumuliert, wenn festgestellt wird, dass der Temperaturunterschied über nachfolgende voreingestellte Zeiträume abnimmt, und die benannte kumulierte Temperatur mit einem vorher festgelegten Sollwert vergleicht.

4. Eine Waschmaschine nach Anspruch 3, bei welcher die Steuereinrichtung (61) so betätigbar ist, dass sie den Betrieb der Waschgut-Trocknungseinheit (40) beendet, sobald die kumulierte Temperatur gleich einem ersten voreingestellten Sollwert ist oder unter diesem liegt.

5. Eine Waschmaschine nach Anspruch 4, bei welcher die Steuereinrichtung (61) betätigbar ist, dass sie den Betrieb der Waschgut-Trocknungseinheit (40) beendet, sobald die kumulierte Temperatur nicht gleich einem ersten voreingestellten Sollwert ist oder unter diesem ersten voreingestellten Sollwert liegt, und sobald der Temperaturunterschied über einen voreingestellten Zeitraum gleich einem dem voreingestellten Zeitraum entsprechenden zweiten voreingestellten Sollwert ist oder unter diesem zweiten voreingestellten Sollwert liegt.

6. Eine Waschmaschine nach Anspruch 5, bei welcher die Steuereinrichtung (61) betätigbar ist, um festzustellen, ob der Temperaturunterschied über einen voreingestellten Zeitraum gleich einem dritten voreingestellten Sollwert ist oder unter diesem dritten voreingestellten Sollwert liegt, sobald die kumulierte Temperatur nicht gleich einem ersten voreingestellten Sollwert ist oder unter diesem ersten voreingestellten Sollwert liegt und die Temperatur über einen voreingestellten Zeitraum nicht gleich einem dem voreingestellten Zeitraum entsprechenden zweiten Sollwert ist oder unter diesem zweiten Sollwert liegt.

7. Eine Waschmaschine nach Anspruch 6, bei welcher die Steuereinrichtung (61) betätigbar ist, um den Betrieb des Trockenzyklus fortzusetzen, wenn die Temperatur über einen voreingestellten Zeitraum nicht gleich einem dem voreingestellten Zeitraum entsprechenden zweiten Sollwert ist oder unter diesem zweiten Sollwert liegt.

8. Eine Waschmaschine nach Anspruch 7, bei welcher die Steuereinrichtung (61) betätigbar ist, um die Anzahl der voreingestellten Zeiträume, über welche hinweg die Temperaturunterschiede erfasst werden, zu erhöhen und die erhöhte Anzahl von Erfassungen mit einer Sollanzahl von Erfassungen zu vergleichen, welche einem kumulativ erfassten Zeitraum entspricht, in welchem die Waschgut-Trocknungseinheit (40) operativ ist.

9. Die Waschmaschine nach einem beliebigen der vorhergehenden Ansprüche, ferner umfassend einen in einem weiter unten liegenden Abschnitt des Luftkanals (42, 43) angeordneten Ablasskanal (43a) zur Abfuhr des im Luftkanal (42, 43) kondensierten Wassers, bei welcher der Temperaturfühler (65) zwischen einem unteren Ende des Kanals (42, 43) in Kommunikation mit dem Inneren der Wanne (11) und dem Ablasskanal (43a) angeordnet ist.

10. Die Waschmaschine nach einem der vorhergehenden Ansprüche, bei welcher das Kondensationselement (51) ein Sprühkopf (52) in Kommunikation mit einem mit dem Kondensationselement (51) verbundenen Kaltwasserzulaufschlauch (52) und ein im Kaltwasserzulaufschlauch (52) angeordnetes Ventil (53) ist.

11. Die Waschmaschine nach Anspruch 10, bei welcher das Ventil (53) betätigbar ist, um wahlweise das von einer externen Quelle gelieferte kalte Wasser so zufließen zu lassen oder zu sperren, dass die Menge des sich im Kanal (42, 43) sammelnden Wassers größer ist als die Menge des durch den Ablasskanal (43a) abgeführten Wassers, sodass der Temperaturfühler (65) im angesammelten Wasser eingetaucht ist.

12. Eine Methode zum Steuern einer Waschmaschine einschließlich einer Wanne (11) zur Aufnahme des zu waschenden Waschguts und einer Waschgut-Trocknungseinheit (40) zur Trocknung des gewaschenen Waschguts, umfassend einen Luftkanal (42, 43), von dem jedes Ende in Kommunikation mit dem Inneren der Wanne (11) steht, einer Heizvorrichtung (44) und eines im Luftkanal (42, 43) angebrachten Kondensationselements (51), so dass die Feuchtigkeit aus der durch den Luftkanal (42, 43) zirkulierenden Luft durch das Kondensationselement (51) entfernt wird, bevor sie durch die Heizvorrichtung (44) erwärmt wird, die Methode **gekennzeichnet durch** die Schritte der Erfassung der Temperatur des sich am Boden des Luftkanals (42, 43) angesammelten Kondenswassers mithilfe eines in einem unteren Teil des Kanals (42, 43) so angeordneten Temperaturfühlers (65), dass er in dem genannten Kondenswasser eingetaucht ist, und der Beendigung des Betriebs der Waschgut-Trocknungseinheit (40) in Anhängigkeit von dem am Temperaturfühler (65) über einen voreingestellten Zeitraum festgestellten Temperaturunterschied.

13. Eine Methode zum Steuern einer Waschmaschine nach Anspruch 12, umfassend den Schritt der Erfassung der Temperatur des im Kanal (42, 43) kondensierten Wassers zu Beginn und am Ende einer Anzahl voreingestellter Zeiträume, und der Beendigung des Betriebs der Waschgut-Trocknungseinheit (40), wenn die erfasste Temperatur über nachfolgende voreingestellte Zeiträume abnimmt.

14. Eine Methode zum Steuern einer Waschmaschine nach Anspruch 13, umfassend den Schritt der Kumulation der erfassten Temperaturunterschiede über die einzelnen voreingestellten Zeiträume, wenn festgestellt wird, dass der Temperaturunterschied über nachfolgende voreingestellte Zeiträume abnimmt, sowie den Schritt des Vergleichs der kumulierten Temperaturunterschiede mit einem vorher festgelegten Sollwert.

## Revendications

1. Machine à laver comportant une cuve (11), destinée à recevoir du linge à laver, ainsi qu'un module de séchage (40), destiné à sécher le linge lavé, qui comprend un conduit d'air (42, 43) dont chaque extrémité est en communication avec l'intérieur de la cuve (11), une résistance chauffante (44) et un élément condenseur (51) étant montés dans ledit conduit (42, 43) de telle façon que l'air qui circule dans le conduit (42, 43) est déshumidifié par l'élément condenseur (51) avant d'être chauffé par la résistance chauffante (44), **caractérisée par** une sonde de détection de température (65), montée dans une partie inférieure du conduit (42, 43) de telle façon que la sonde de détection de température (65) est plongée dans l'eau de condensation accumulée au fond du conduit (42, 43) afin de détecter la température de ladite eau, et par un contrôleur (61) adapté pour stopper le fonctionnement du module de séchage (40) en fonction de la différence de température de l'eau détectée par la sonde de détection de température (65) sur une durée prédéfinie.

2. Machine à laver selon la revendication 1, dans laquelle la sonde de détection de température (65) est adaptée pour détecter la température de l'eau condensée dans le conduit (42, 43) au début et à la fin d'un certain nombre de durées prédéfinies, le contrôleur (61) étant adapté pour déterminer la différence de température sur chaque durée prédéfinie et si la différence de température déterminée sur des durées prédéfinies consécutives augmente ou diminue.

3. Machine à laver selon la revendication 2, dans laquelle le contrôleur (61) est adapté pour cumuler les différences de température déterminées sur chaque durée prédéfinie s'il est déterminé que la différence de température sur des durées prédéfinies consécutives diminue et pour comparer ladite température cumulée à une valeur de consigne prédéterminée.

4. Machine à laver selon la revendication 3, dans laquelle le contrôleur (61) est adapté pour stopper le fonctionnement du module de séchage (40) lorsque la température cumulée est égale ou inférieure à une première valeur de consigne prédéterminée.

5. Machine à laver selon la revendication 4, dans laquelle le contrôleur (61) est adapté pour stopper le fonctionnement du module de séchage (40) lorsque la température cumulée n'est pas égale ou inférieure à une première valeur de consigne prédéterminée et que la différence de température sur une durée prédéfinie est égale ou inférieure à une deuxième valeur de consigne prédéterminée correspondant à cette durée prédéfinie.

6. Machine à laver selon la revendication 5, dans laquelle le contrôleur (61) est adapté pour déterminer si la différence de température sur une durée prédéfinie est égale ou inférieure à une troisième valeur de consigne prédéterminée lorsque la température cumulée n'est pas égale ou inférieure à une première valeur de consigne prédéterminée et que la température sur une durée prédéfinie n'est pas égale ou inférieure à une deuxième valeur de consigne correspondant à cette durée prédéfinie.

7. Machine à laver selon la revendication 6, dans laquelle le contrôleur (61) est adapté pour continuer l'exécution du cycle de séchage si la température sur une durée prédéfinie n'est pas égale ou inférieure à une deuxième valeur de consigne correspondant à cette durée prédéfinie.

8. Machine à laver selon la revendication 7, dans laquelle le contrôleur (61) est adapté pour augmenter le nombre de durées prédéfinies sur lesquelles des différences de température sont détectées et pour comparer le nombre augmenté de détections à un nombre de détections défini correspondant à une durée déterminée cumulativement dans laquelle le module de séchage (40) est en fonctionnement.

9. Machine à laver selon l'une quelconque des revendications précédentes, comprenant en outre un conduit d'évacuation (43a) disposé dans une partie inférieure du conduit (42, 43) afin d'évacuer l'eau condensée dans le conduit (42, 43), dans laquelle la sonde de détection de température (65) est disposée entre une extrémité inférieure du conduit (42, 43) en communication avec l'intérieur de le cuve (11) et le conduit d'évacuation (43a).

10. Machine à laver selon l'une quelconque des revendications précédentes, dans laquelle l'élément condenseur (51) est une buse de pulvérisation en communication avec un flexible d'arrivée d'eau froide (52) relié à l'élément condenseur (51) et à une vanne (53) disposée dans le flexible d'arrivée d'eau froide (52) .

11. Machine à laver selon la revendication 10, dans laquelle la vanne (53) est adaptée pour alimenter ou couper sélectivement l'eau froide provenant d'une source extérieure de façon que la quantité d'eau accumulée dans le conduit (42, 43) soit supérieure à la quantité d'eau évacuée par le conduit d'évacuation (43a) afin que la sonde de détection de température (65) soit plongée dans l'eau accumulée.

12. Procédé de commande d'une machine à laver comportant une cuve (11), destinée à recevoir du linge à laver, ainsi qu'un module de séchage (40), destiné à sécher le linge lavé, qui comprend un conduit d'air (42, 43) dont chaque extrémité est en communication avec l'intérieur de la cuve (11), une résistance chauffante (44) et un élément condenseur (51) étant montés dans ledit conduit (42, 43) de telle façon que l'air qui circule dans le conduit (42, 43) est déshumidifié par l'élément condenseur (51) avant d'être chauffé par la résistance chauffante (44), ledit procédé étant **caractérisé par** les étapes consistant à détecter la température de l'eau de condensation accumulée au fond du conduit (42, 43) en utilisant une sonde de détection de température (65) disposée dans une partie inférieure du conduit (42, 43) de telle façon qu'elle est plongée dans ladite eau de condensation, et à stopper le fonctionnement du module de séchage (40) en fonction de la différence de température détectée par la sonde de détection de température (65) sur une durée prédéfinie.

13. Procédé de commande d'une machine à laver selon la revendication 12, comprenant l'étape consistant à détecter la température de l'eau condensée dans le conduit (42, 43) au début et à la fin d'un certain nombre de durées prédéfinies et à stopper le fonctionnement du module de séchage (40) lorsque la température déterminée sur des durées prédéfinies consécutives diminue.

14. Procédé de commande d'une machine à laver selon la revendication 13, comprenant l'étape consistant à cumuler les différences de température déterminées sur chaque durée prédéfinie s'il est déterminé que la différence de température sur des durées prédéfinies consécutives diminue, et l'étape consistant à comparer les différences de température cumulées à une valeur de consigne prédéterminée.
